# EUROPEAN PATENT APPLICATION

(11) **EP 3 309 894 A2**
(43) Date of publication of application: **18.04.2018**
(21) Application number: 17196189.9
(22) Date of filing: 12.10.2017
(51) Int. Cl.: H01M 10/6572, H01M 10/615, H01M 10/613, H01M 10/63, H01M 10/6567, H01M 10/6563, H01M 10/48

(54) **COOLING AND HEATING SYSTEM**

(30) Priority: 14.10.2016 CN 201621124175 U
(71) Applicant: Optimum Battery Co., Ltd., Shenzhen City, Guangdong 518118 (CN)
(72) Inventor: SHENG, Heng, Shenzhen, Guangdong 518118 (CN); WEI, Shi hai, Shenzhen, Guangdong 518118 (CN); TAO, Jiang song, Shenzhen, Guangdong 518118 (CN)
(74) Representative: Fry, Emma Leland

(57) **Abstract**

A cooling and heating system includes a battery pack, a temperature sensing module, a semiconductor cooling chip, a current adjustment module, and a control module. The control module controls the current adjustment module to make a current flowed into the semiconductor cooling chip in a first direction, when a temperature of the battery pack is greater than a first reference temperature; and controls the current adjustment module to make the current flowed into the semiconductor cooling chip in a second direction opposite to the first direction, when the temperature of the battery pack is less than a second reference temperature. The battery pack is cooled by the semiconductor cooling chip, when the current flowed into the semiconductor cooling chip is in the first direction. The battery pack is heated by the semiconductor cooling chip, when the current flowed into the semiconductor cooling chip is in the second direction.

## Description

### BACKGROUND OF THE INVENTION

### Field of the Invention

This invention relates to electric vehicles, and more particular, to a cooling and heating system applied in an electric vehicle.

### Description of the Related Art

Generally, electric vehicles are powered by battery packs. However, each battery pack should be operated in a safe temperature range. If a temperature of a battery pack is out of a corresponding safe temperature range, the battery pack cannot be operated properly, and an electric vehicle powered by the battery pack cannot be operated properly accordingly.

It is desirable to provide an invention, which can overcome the problems and limitations mentioned above.

### SUMMARY OF THE INVENTION

The present invention is directed to a cooling and heating system that substantially obviates one or more of the problems due to limitations and disadvantages of the related art.

In an aspect of the present invention, there is provided a cooling and heating system comprising: a battery pack; a temperature sensing module configured to sense a temperature of the battery pack; a semiconductor cooling chip; a power supply; a current adjustment module electrically coupled to the semiconductor cooling chip and the power supply, and configured to adjust a current flowed into the semiconductor cooling chip; and a control module electrically coupled to the temperature sensing module and the current adjustment module; wherein the control module is configured to control the current adjustment module to make the current flowed into the semiconductor cooling chip in a first direction, on condition that the temperature of the battery pack is greater than a first reference temperature; and the control module is further configured to control the current adjustment module to make the current flowed into the semiconductor cooling chip in a second direction opposite to the first direction, on condition that the temperature of the battery pack is less than a second reference temperature, the second reference temperature is less than the first reference temperature; and wherein the semiconductor cooling chip is configured to cool the battery pack, on condition that the current flowed into the semiconductor cooling chip is in the first direction; and the semiconductor cooling chip is further configured to heat the battery pack, on condition that the current flowed into the semiconductor cooling chip is in the second direction.

It is to be understood that both the foregoing general description and the following detailed description are exemplary and explanatory and are intended to provide further explanations of the invention as claimed.

### BRIEF DESCRIPTION OF THE DRAWINGS

Implementations of the present technology will now be described, by way of example only, with reference to the attached drawings. It may be understood that these drawings are not necessarily drawn to scale, and in no way limit any changes in form and detail that may be made to the described embodiments by one skilled in the art without departing from the spirit and scope of the described embodiments.
FIG. 1 is a block schematic diagram of a cooling and heating system provided by one embodiment of the present invention; wherein the cooling and heating system comprises a battery pack, a temperature sensing module, and a current adjustment module.
FIG. 2 is a circuit diagram of the current adjustment module of FIG. 1 provided by a first embodiment of the present invention.
FIG. 3 is a circuit diagram of the current adjustment module of FIG. 1 provided by a second embodiment of the present invention.
FIG. 4 is a circuit diagram of the current adjustment module of FIG. 1 provided by a third embodiment of the present invention.
FIG. 5 is a schematic diagram of the battery pack of FIG. 1.
FIG. 6 is a block schematic diagram of the temperature sensing module of FIG. 1.

### DETAILED DESCRIPTION OF THE PREFERRED EMBODIMENTS

In order to make the purposes, technical solutions, and advantages of the present invention be clearer, the present invention will be further described in detail hereafter with reference to the accompanying drawings and embodiments. However, it will be understood by those of ordinary skill in the art that the embodiments described herein can be practiced without these specific details. In other instances, methods, procedures and components have not been described in detail so as not to obscure the related relevant feature being described. Also, it should be understood that the embodiments described herein are only intended to illustrate but not to limit the present invention.

Several definitions that apply throughout this disclosure will be presented. The term "coupled" is defined as connected, whether directly or indirectly through intervening components, and is not necessarily limited to physical connections. The connection can be such that the objects are permanently connected or releasably connected. The term "comprise", when utilized, means "include, but not necessarily limited to"; it specifically indicates open-ended inclusion or membership in a so-described combination, group, series and the like.

It should be noted that references to "an" or "one" embodiment in this disclosure are not necessarily to the same embodiment, and such references mean "at least one."

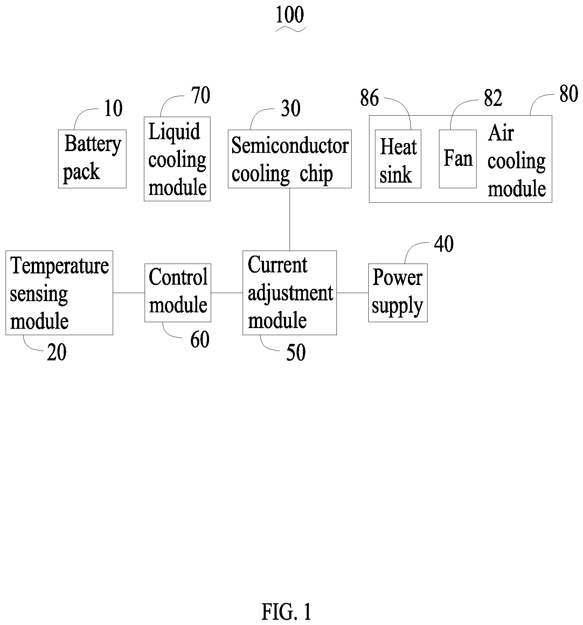

Fig. 1 illustrates a block schematic diagram of a cooling and heating system 100 provided by one embodiment of the present invention. The cooling and heating system 100 comprises a battery pack 10, a temperature sensing module 20, a semiconductor cooling chip 30, a power supply 40, a current adjustment module 50, and a control module 60. The current adjustment module 50 is electrically coupled to the semiconductor cooling chip 30 and the power supply 40. The control module 60 is electrically coupled to the temperature sensing module 20 and the current adjustment module 50.

The temperature sensing module 20 is configured to sense a temperature of the battery pack 10, and output the temperature of the battery pack 10 sensed by the temperature sensing module 20 to the control module 60. The current adjustment module 50 is configured to adjust a current flowed into the semiconductor cooling chip 30. The control module 60 is configured to compare the temperature of the battery pack 10 with a first reference temperature and a second reference temperature, the second reference temperature is less than the first reference temperature. The control module 60 is further configured to control the current adjustment module 50 to make the current flowed into the semiconductor cooling chip 30 in a first direction, on condition that the temperature of the battery pack 10 is greater than the first reference temperature. The control module 60 is further configured to control the current adjustment module 50 to make the current flowed into the semiconductor cooling chip 30 in a second direction opposite to the first direction, on condition that the temperature of the battery pack 10 is less than the second reference temperature. The semiconductor cooling chip 30 is configured to cool the battery pack 10, on condition that the current flowed into the semiconductor cooling chip 30 is in the first direction. The semiconductor cooling chip 30 is further configured to heat the battery pack 10, on condition that the current flowed into the semiconductor cooling chip 30 is in the second direction.

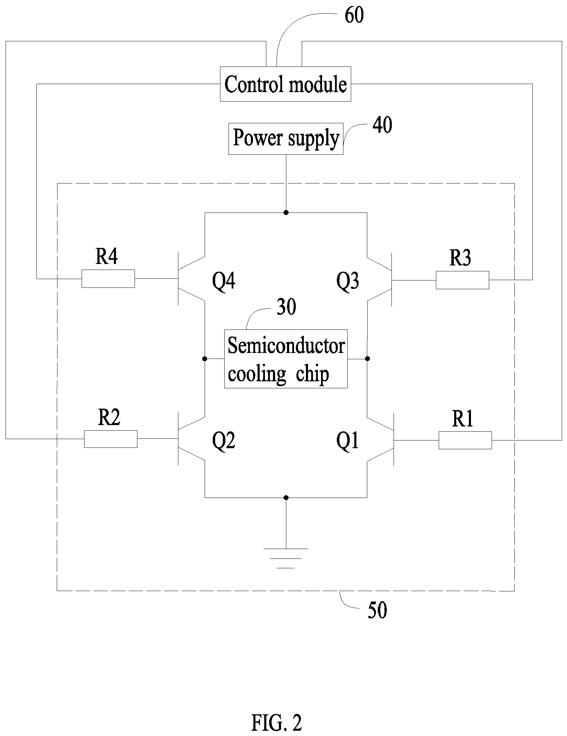

Please refer to Figures 2 to 4, the current adjustment module 50 comprises a first resistor R1, a second resistor R2, a third resistor R3, a fourth resistor R4, a first electronic switch Q1, a second electronic switch Q2, a third electronic switch Q3, and a fourth electronic switch Q4. The first electronic switch Q1 comprises a first terminal electrically coupled to the control module 60 through the first resistor R1, a second terminal electrically couple to a first terminal of the semiconductor cooling chip 30, and a third terminal electrically couple to ground. The second electronic switch Q2 comprises a first terminal electrically coupled to the control module 60 through the second resistor R2, a second terminal electrically couple to a second terminal of the semiconductor cooling chip 30, and a third terminal electrically couple to ground. The third electronic switch Q3 comprises a first terminal electrically coupled to the control module 60 through the third resistor R3, a second terminal electrically couple to the first terminal of the semiconductor cooling chip 30, and a third terminal electrically couple to the power supply 40. The fourth electronic switch Q4 comprises a first terminal electrically coupled to the control module 60 through the fourth resistor R4, a second terminal electrically couple to the second terminal of the semiconductor cooling chip 30, and a third terminal electrically couple to the power supply 40.

The control module 60 is configured to control the first electronic switch Q1 and the fourth electronic switch Q4 to be turned on, and control the second electronic switch Q2 and the third electronic switch Q3 to be turned off, on condition that the temperature of the battery pack 10 is greater than the first reference temperature. An electric power supplied from the power supply 40 flows into the ground through the fourth electronic switch Q4, the semiconductor cooling chip 30, and the first electronic switch Q1, and the current flowed into the semiconductor cooling chip 30 is in the first direction.

The control module 60 is configured to control the first electronic switch Q1 and the fourth electronic switch Q4 to be turned off, and control the second electronic switch Q2 and the third electronic switch Q3 to be turned on, on condition that the temperature of the battery pack 10 is less than the second reference temperature. The electric power supplied from the power supply 40 flows into the ground through the third electronic switch Q3, the semiconductor cooling chip 30, and the second electronic switch Q2, and the current flowed into the semiconductor cooling chip 30 is in the second direction.

In one embodiment, each of the first electronic switch Q1, the second electronic switch Q2, the third electronic switch Q3, and the fourth electronic switch Q4 is a bipolar junction transistor (BJT) (as shown in Fig.2), and the first terminal, the second terminal, and the third terminal of each of the first electronic switch Q1, the second electronic switch Q2, the third electronic switch Q3, and the fourth electronic switch Q4 correspond to a base, a collector, and an emitter of the BJT.

In one embodiment, each of the first electronic switch Q1, the second electronic switch Q2, the third electronic switch Q3, and the fourth electronic switch Q4 is an npn-type BJT, and the first terminal, the second terminal, and the third terminal of each of the first electronic switch Q1, the second electronic switch Q2, the third electronic switch Q3, and the fourth electronic switch Q4 correspond to a base, a collector, and an emitter of the npn-type BJT.

In one embodiment, each of the first electronic switch Q1, the second electronic switch Q2, the third electronic switch Q3, and the fourth electronic switch Q4 is a pnp-type BJT, and the first terminal, the second terminal, and the third terminal of each of the first electronic switch Q1, the second electronic switch Q2, the third electronic switch Q3, and the fourth electronic switch Q4 correspond to a base, a collector, and an emitter of the pnp-type BJT.

In one embodiment, each of the first electronic switch Q1 and the second electronic switch Q2 is the npn-type BJT, and the first terminal, the second terminal, and the third terminal of each of the first electronic switch Q1 and the second electronic switch Q2 correspond to the base, the collector, and the emitter of the npn-type BJT. Each of the third electronic switch Q3 and the fourth electronic switch Q4 is the pnp-type BJT, and the first terminal, the second terminal, and the third terminal of each of the third electronic switch Q3 and the fourth electronic switch Q4 correspond to the base, the collector, and the emitter of the pnp-type BJT.

In one embodiment, each of the first electronic switch Q1 and the second electronic switch Q2 is the pnp-type BJT, and the first terminal, the second terminal, and the third terminal of each of the first electronic switch Q1 and the second electronic switch Q2 correspond to the base, the collector, and the emitter of the pnp-type BJT. Each of the third electronic switch Q3 and the fourth electronic switch Q4 is the npn-type BJT, and the first terminal, the second terminal, and the third terminal of each of the third electronic switch Q3 and the fourth electronic switch Q4 correspond to the base, the collector, and the emitter of the npn-type BJT.

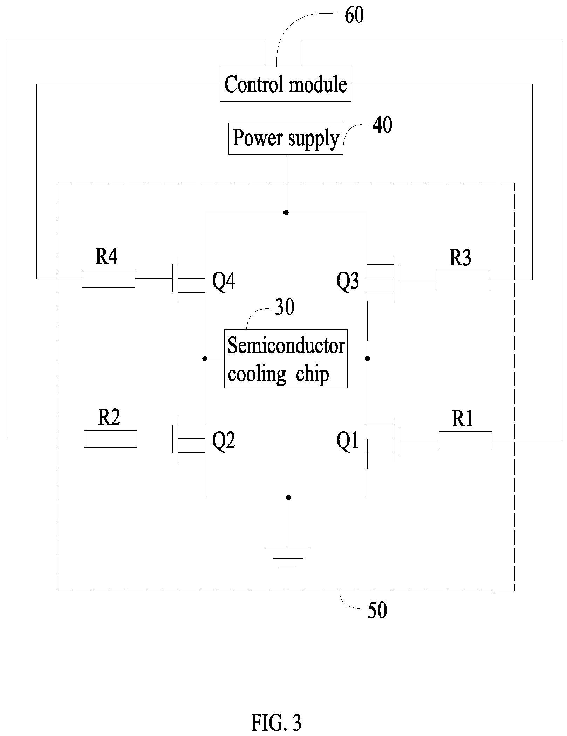

In one embodiment, each of the first electronic switch Q1, the second electronic switch Q2, the third electronic switch Q3, and the fourth electronic switch Q4 is a metal-oxide-semiconductor field-effect transistor (MOSFET) (as shown in Fig.3), and the first terminal, the second terminal, and the third terminal of each of the first electronic switch Q1, the second electronic switch Q2, the third electronic switch Q3, and the fourth electronic switch Q4 correspond to a gate, a drain and a source of the MOSFET.

In one embodiment, each of the first electronic switch Q1, the second electronic switch Q2, the third electronic switch Q3, and the fourth electronic switch Q4 is an N-channel MOSFET, and the first terminal, the second terminal, and the third terminal of each of the first electronic switch Q1, the second electronic switch Q2, the third electronic switch Q3, and the fourth electronic switch Q4 correspond to a gate, a drain and a source of the N-channel MOSFET.

In one embodiment, each of the first electronic switch Q1, the second electronic switch Q2, the third electronic switch Q3, and the fourth electronic switch Q4 is a P-channel MOSFET, and the first terminal, the second terminal, and the third terminal of each of the first electronic switch Q1, the second electronic switch Q2, the third electronic switch Q3, and the fourth electronic switch Q4 correspond to a gate, a drain and a source of the P-channel MOSFET.

In one embodiment, each of the first electronic switch Q1 and the second electronic switch Q2 is the N-channel MOSFET, and the first terminal, the second terminal, and the third terminal of each of the first electronic switch Q1 and the second electronic switch Q2 correspond to the gate, the drain and the source of the N-channel MOSFET. Each of the third electronic switch Q3 and the fourth electronic switch Q4 is the P-channel MOSFET, and the first terminal, the second terminal, and the third terminal of each of the third electronic switch Q3 and the fourth electronic switch Q4 correspond to the gate, the drain and the source of the P-channel MOSFET.

In one embodiment, each of the first electronic switch Q1 and the second electronic switch Q2 is the P-channel MOSFET, and the first terminal, the second terminal, and the third terminal of each of the first electronic switch Q1 and the second electronic switch Q2 correspond to the gate, the drain and the source of the P-channel MOSFET. Each of the third electronic switch Q3 and the fourth electronic switch Q4 is the N-channel MOSFET, and the first terminal, the second terminal, and the third terminal of each of the third electronic switch Q3 and the fourth electronic switch Q4 correspond to the gate, the drain and the source of the N-channel MOSFET.

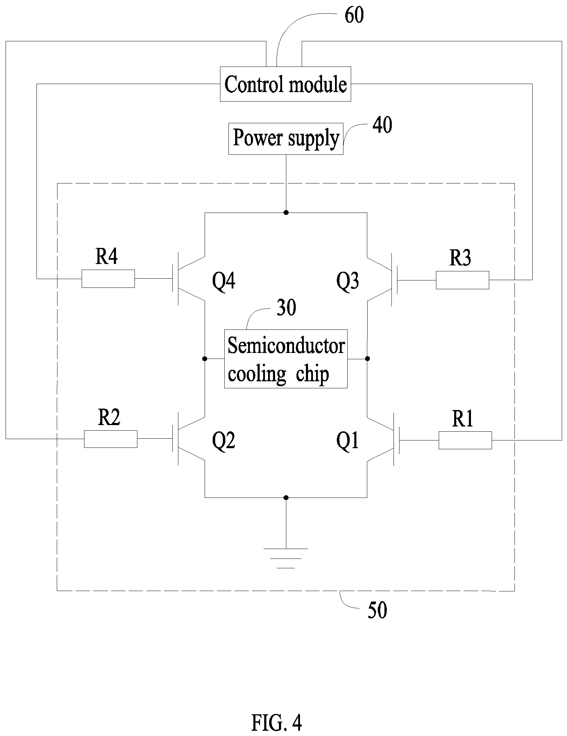

In one embodiment, each of the first electronic switch Q1, the second electronic switch Q2, the third electronic switch Q3, and the fourth electronic switch Q4 is an insulated gate bipolar transistor (IGBT) (as shown in Fig.4), and the first terminal, the second terminal, and the third terminal of each of the first electronic switch Q1, the second electronic switch Q2, the third electronic switch Q3, and the fourth electronic switch Q4 correspond to a gate, a collector, and an emitter of the IGBT.

Please refer to Fig.1 again, the cooling and heating system 100 further comprises a liquid cooling module 70 positioned between the battery pack 10 and the semiconductor cooling chip 30, and the semiconductor cooling chip 30 is configured to cool or heat the battery pack 10 through the liquid cooling module 70.

The cooling and heating system 100 further comprises an air cooling module 80 positioned on a side of the semiconductor cooling chip 30 opposite to the battery pack 10. The air cooling module 80 is configured to cool the semiconductor cooling chip 30 and the battery pack 10. In one embodiment, the air cooling module 80 comprises at least one fan 82 and at least one heat sink 86.

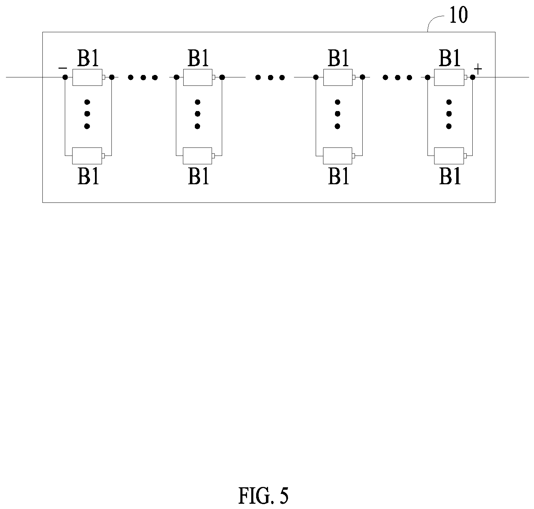

Fig. 5 illustrates a schematic diagram of the battery pack 10 provided by one embodiment of the present invention. The battery pack 10 comprising a plurality of rechargeable batteries B1 configured in a series, parallel or a mixture of both to store and deliver electric energy.

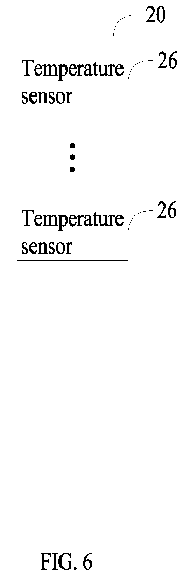

FIG. 6 illustrates a block schematic diagram of the temperature sensing module 20 provided by one embodiment of the present invention. The temperature sensing module 20 comprises a plurality of temperature sensors 26 positioned on different sensing points of the battery pack 10. Each temperature sensor 26 is configured to sense temperature around a corresponding sensing point, and output the sensed temperature to the control module 60. The control module 60 is further configured to compare each sensed temperature with the first reference temperature and the second reference temperature. If one of the sensed temperatures is greater than the first reference temperature, the control module 60 controls the current adjustment module 50 to make the current flowed into the semiconductor cooling chip 30 in the first direction. If one of the sensed temperatures is less than the second reference temperature, the control module 60 controls the current adjustment module 50 to make the current flowed into the semiconductor cooling chip 30 in the second direction.

In one embodiment, the control module 60 comprises a micro controller unit. The first reference temperature is an upper limit value of a safe temperature range of the battery pack 10, the second reference temperature is a lower limit value of the safe temperature range of the battery pack 10, and values of the first reference temperature and the second reference temperature can be adjusted according to the actual situation.

It may be understood that, the semiconductor cooling chip 30 may be a thermoelectric cooler or a heat pump. The semiconductor cooling chip 30 is operated by a Peltier effect or a thermoelectric effect.

The operation principle of the cooling and heating system 100 provided by one embodiment of the present invention will be described below.

In operate, each temperature sensor 26 of the temperature sensing module 20 is configured to sense temperature around a corresponding sensing point, and output the sensed temperature to the control module 60. The control module 60 compares each sensed temperature with the first reference temperature and the second reference temperature, and controls the current adjustment module 50 to adjust the current flowed into the semiconductor cooling chip 30, according to the compared result.

When one of the sensed temperatures is greater than the first reference temperature (that is, the temperature of the battery pack 10 is greater than the first reference temperature), the control module 60 controls the first electronic switch Q1 and the fourth electronic switch Q4 to be turned on, and control the second electronic switch Q2 and the third electronic switch Q3 to be turned off. The electric power supplied from the power supply 40 flows into the ground through the fourth electronic switch Q4, the semiconductor cooling chip 30, and the first electronic switch Q1, and the current flowed into the semiconductor cooling chip 30 is in the first direction. The battery pack 10 is cooled by the semiconductor cooling chip 30 through the liquid cooling module 70.

When one of the sensed temperatures is less than the second reference temperature (that is, the temperature of the battery pack 10 is less than the second reference temperature), the control module 60 controls the first electronic switch Q1 and the fourth electronic switch Q4 to be turned off, and control the second electronic switch Q2 and the third electronic switch Q3 to be turned on. The electric power supplied from the power supply 40 flows into the ground through the third electronic switch Q3, the semiconductor cooling chip 30, and the second electronic switch Q2, and the current flowed into the semiconductor cooling chip 30 is in the second direction. The battery pack 10 is heated by the semiconductor cooling chip 30 through the liquid cooling module 70.

When each sensed temperature is less than or equal to the first reference temperature and is greater than or equal to the second reference temperature, the control module 60 controls the first electronic switch Q1, the second electronic switch Q2, the third electronic switch Q3, and the fourth electronic switch Q4 to be turned off. There is no current flowed into the semiconductor cooling chip 30, and the semiconductor cooling chip 30 is not operated. The battery pack 10 is cooled by the liquid cooling module 70 and the air cooling module 80.

As detail above, the temperature sensing module 20 senses the temperature of the battery pack 10, and outputs the temperature of the battery pack 10 sensed by the temperature sensing module 20 to the control module 60. The control module 60 controls the current adjustment module 50 to adjust the current flowed into the semiconductor cooling chip 30, according to the temperature of the battery pack 10. The semiconductor cooling chip 30 is configured to cool or heat the battery pack 10, according to the current flowed into the semiconductor cooling chip 30. Therefore, the temperature of the battery pack 10 is maintained within the safe temperature range, the battery pack 10 can operate properly, and an electric vehicle powered by the battery pack 10 can operate properly accordingly.

It will be apparent to those skilled in the art that various modification and variations can be made in the multicolor illumination device and related method of the present invention without departing from the spirit or scope of the invention. Thus, it is intended that the present invention cover modifications and variations that come within the scope of the appended claims and their equivalents.

## Claims

1. A cooling and heating system (100), comprising:
a battery pack (10);
a temperature sensing module (20) configured to sense a temperature of the battery pack (10);
a semiconductor cooling chip (30);
a power supply (40);
a current adjustment module (50) electrically coupled to the semiconductor cooling chip (30) and the power supply (40), and configured to adjust a current flowed into the semiconductor cooling chip (30); and
a control module (60) electrically coupled to the temperature sensing module (20) and the current adjustment module (50);
wherein the control module (60) is configured to control the current adjustment module (50) to make the current flowed into the semiconductor cooling chip (30) in a first direction, on condition that the temperature of the battery pack (10) is greater than a first reference temperature; and the control module (60) is further configured to control the current adjustment module (50) to make the current flowed into the semiconductor cooling chip (30) in a second direction opposite to the first direction, on condition that the temperature of the battery pack (10) is less than a second reference temperature, the second reference temperature is less than the first reference temperature; and
wherein the semiconductor cooling chip (30) is configured to cool the battery pack (10), on condition that the current flowed into the semiconductor cooling chip (30) is in the first direction; and the semiconductor cooling chip (30) is further configured to heat the battery pack (10), on condition that the current flowed into the semiconductor cooling chip (30) is in the second direction.

2. The cooling and heating system (100) of claim 1, wherein the current adjustment module (50) comprises:
a first resistor (R1), a second resistor (R2), a third resistor (R3), and a fourth resistor (R4); and
a first electronic switch (Q1) comprising a first terminal electrically coupled to the control module (60) through the first resistor (R1), a second terminal electrically couple to a first terminal of the semiconductor cooling chip (30), and a third terminal electrically couple to ground;
a second electronic switch (Q2) comprising a first terminal electrically coupled to the control module (60) through the second resistor (R2), a second terminal electrically couple to a second terminal of the semiconductor cooling chip (30), and a third terminal electrically couple to ground;
a third electronic switch (Q3) comprising a first terminal electrically coupled to the control module (60) through the third resistor (R3), a second terminal electrically couple to the first terminal of the semiconductor cooling chip (30), and a third terminal electrically couple to the power supply (40); and
a fourth electronic switch (Q4) comprising a first terminal electrically coupled to the control module (60) through the fourth resistor (R4), a second terminal electrically couple to the second terminal of the semiconductor cooling chip (30), and a third terminal electrically couple to the power supply (40).

3. The cooling and heating system (100) of claim 2, wherein the control module (60) is configured to control the first electronic switch (Q1) and the fourth electronic switch (Q4) to be turned on, and control the second electronic switch (Q2) and the third electronic switch (Q3) to be turned off, on condition that the temperature of the battery pack (10) is greater than the first reference temperature; an electric power supplied from the power supply (40) flows into the ground through the fourth electronic switch (Q4), the semiconductor cooling chip (30), and the first electronic switch (Q1), and the current flowed into the semiconductor cooling chip (30) is in the first direction; and
wherein the control module (60) is configured to control the first electronic switch (Q1) and the fourth electronic switch (Q4) to be turned off, and control the second electronic switch (Q2) and the third electronic switch (Q3) to be turned on, on condition that the temperature of the battery pack (10) is less than the second reference temperature; the electric power supplied from the power supply (40) flows into the ground through the third electronic switch (Q3), the semiconductor cooling chip (30), and the second electronic switch (Q2), and the current flowed into the semiconductor cooling chip (30) is in the second direction.

4. The cooling and heating system (100) of claim 3, wherein each of the first electronic switch (Q1), the second electronic switch (Q2), the third electronic switch (Q3), and the fourth electronic switch (Q4) is a bipolar junction transistor (BJT), and the first terminal, the second terminal, and the third terminal of each of the first electronic switch (Q1), the second electronic switch (Q2), the third electronic switch (Q3), and the fourth electronic switch (Q4) correspond to a base, a collector, and an emitter of the BJT.

5. The cooling and heating system (100) of claim 4, wherein each of the first electronic switch (Q1), the second electronic switch (Q2), the third electronic switch (Q3), and the fourth electronic switch (Q4) is an npn-type BJT.

6. The cooling and heating system (100) of claim 4, wherein each of the first electronic switch (Q1), the second electronic switch (Q2), the third electronic switch (Q3), and the fourth electronic switch (Q4) is a pnp-type BJT.

7. The cooling and heating system (100) of claim 4, wherein each of the first electronic switch (Q1) and the second electronic switch (Q2) is an npn-type BJT, and each of the third electronic switch (Q3) and the fourth electronic switch (Q4) is a pnp-type BJT.

8. The cooling and heating system (100) of claim 4, wherein each of the first electronic switch (Q1) and the second electronic switch (Q2) is a pnp-type BJT, and each of the third electronic switch (Q3) and the fourth electronic switch (Q4) is an npn-type BJT.

9. The cooling and heating system (100) of claim 3, wherein each of the first electronic switch (Q1), the second electronic switch (Q2), the third electronic switch (Q3), and the fourth electronic switch (Q4) is a metal-oxide-semiconductor field-effect transistor (MOSFET), and the first terminal, the second terminal, and the third terminal of each of the first electronic switch (Q1), the second electronic switch (Q2), the third electronic switch (Q3), and the fourth electronic switch (Q4) correspond to a gate, a drain and a source of the MOSFET.

10. The cooling and heating system (100) of claim 9, wherein each of the first electronic switch (Q1), the second electronic switch (Q2), the third electronic switch (Q3), and the fourth electronic switch (Q4) is an N-channel MOSFET.

11. The cooling and heating system (100) of claim 9, wherein each of the first electronic switch (Q1), the second electronic switch (Q2), the third electronic switch (Q3), and the fourth electronic switch (Q4) is a P-channel MOSFET.

12. The cooling and heating system (100) of claim 9, wherein each of the first electronic switch (Q1) and the second electronic switch (Q2) is an N-channel MOSFET, and each of the third electronic switch (Q3) and the fourth electronic switch (Q4) is a P-channel MOSFET.

13. The cooling and heating system (100) of claim 9, wherein each of the first electronic switch (Q1) and the second electronic switch (Q2) is a P-channel MOSFET, and each of the third electronic switch (Q3) and the fourth electronic switch (Q4) is an N-channel MOSFET.

14. The cooling and heating system (100) of claim 3, wherein each of the first electronic switch (Q1), the second electronic switch (Q2), the third electronic switch (Q3), and the fourth electronic switch (Q4) is an insulated gate bipolar transistor (IGBT), and the first terminal, the second terminal, and the third terminal of each of the first electronic switch (Q1), the second electronic switch (Q2), the third electronic switch (Q3), and the fourth electronic switch (Q4) correspond to a gate, a collector, and an emitter of the IGBT.

15. The cooling and heating system (100) of claim 1, wherein the cooling and heating system (100) further comprises a liquid cooling module (70) positioned between the battery pack (10) and the semiconductor cooling chip (30), and the semiconductor cooling chip (30) is configured to cool or heat the battery pack (10) through the liquid cooling module (70).

16. The cooling and heating system (100) of claim 1, wherein the cooling and heating system (100) further comprises an air cooling module (80) positioned on a side of the semiconductor cooling chip (30) opposite to the battery pack (10), the air cooling module (80) is configured to cool the semiconductor cooling chip (30) and the battery pack (10).

17. The cooling and heating system (100) of claim 16, wherein the air cooling module (80) comprises at least one fan (82).

18. The cooling and heating system (100) of claim 17, wherein the air cooling module (80) further comprises at least one heat sink (86).

19. The cooling and heating system (100) of claim 1, wherein the temperature sensing module (20) comprises a plurality of temperature sensors (26) positioned on different sensing points of the battery pack (10), each temperature sensor (26) is configured to sense temperature around a corresponding sensing point, and output the sensed temperature to the control module (60); the control module (60) is further configured to compare each sensed temperature with the first reference temperature and the second reference temperature; if one of the sensed temperatures is greater than the first reference temperature, the control module (60) controls the current adjustment module (50) to make the current flowed into the semiconductor cooling chip (30) in the first direction; and if one of the sensed temperatures is less than the second reference temperature, the control module (60) controls the current adjustment module (50) to make the current flowed into the semiconductor cooling chip (30) in the second direction.

20. The cooling and heating system (100) of claim 1, wherein the battery pack (10) comprising a plurality of rechargeable batteries (B1) configured in a series, parallel or a mixture of both to store and deliver electric energy.
